# FASCICULE DE BREVET EUROPEEN

(11) **EP 0 487 393 B1**
(45) Date de publication et mention de la délivrance du brevet: **04.05.1994**
(21) Numéro de dépôt: 91403089.5
(22) Date de dépôt: 18.11.1991
(51) Int. Cl.: F04B 1/04, F16J 15/32

(54) **Mécanisme à fluide sous pression dit "à came tournante"**
Druckflüssigkeitsmechanismus von drehbaren Nocken Bauart
Pressurised fluid mechanism of the rotary cam type

(30) Priorité: 23.11.1990 FR 9014660
(43) Date de publication de la demande: 27.05.1992
(73) Titulaire: POCLAIN HYDRAULICS, Société Anonyme, 60411 Verberie Cédex (FR)
(72) Inventeur: Bigo, Louis, F-60200 Compiègne (FR)
(74) Mandataire: Hoisnard, Jean-Claude

(56) Documents cités:
- EP-A- 348 267
- DE-A- 1 929 079
- DE-A- 3 642 721
- DE-B- 2 524 676
- FR-A- 1 214 899
- FR-A- 2 160 118
- FR-A- 2 254 990
- FR-A- 2 292 854
- FR-A- 2 426 801
- FR-A- 2 473 619

## Description

Est déjà connu un mécanisme à fluide sous pression, moteur ou pompe, dit "à came tournante", tel que défini dans le préambule de la revendication 1. FR-A-2 426 801, de même que FR-A-2 473 619, représente un tel mécanisme.

De manière classique, les éléments d'étanchéité sont constitués par des segments métalliques, qui sont connus pour leur aptitude à réaliser une étanchéité satisfaisante entre deux pièces en déplacement relatif, notamment entre deux pièces montées à rotation relative, telles que ledit distributeur interne par rapport au noyau central. De plus les segments utilisés à ce jour sont relativement peu fragiles. Leur mise en oeuvre, aujourd'hui bien maîtrisée, relève cependant d'un savoir faire certain ; de plus leur encombrement est relativement important, d'autant que fréquemment chaque élément d'étanchéité est constitué par deux segments placés dans deux logements voisins, ceci pour obtenir l'étanchéité qu'un seul segment ne permettrait pas d'obtenir, compte tenu de la présence d'une coupe permettant le montage du segment et de sa faible déformabilité.

L'invention propose un choix nouveau des éléments d'étanchéité, par lequel, avec un encombrement moindre, l'étanchéité obtenue est meilleure que celle obtenue antérieurement avec utilisation des segments métalliques.

Dans le domaine des joints d'étanchéité, des solutions ont déjà été proposées pour résoudre le même problème. Ainsi FR-A-2 254 990 définit une disposition générale de joints d'étanchéité assurant l'étanchéité entre un arbre et un élément par rapport auquel cet arbre est monté à rotation. Les joints d'étanchéité utilisés dans cette application antérieure sont composites et comprennent notamment une bague frottante, qui est réalisée en un matériau plastique, tel qu'un "NYLON" ou un "TEFLON" et qui, immobilisée par rapport audit élément ou audit arbre, est mobile en rotation par rapport à l'autre pièce-arbre ou élément.

L'application de cet enseignement au mécanisme cité en premier n'est cependant pas satisfaisante, I'expérience révélant une insuffisance de la résistance mécanique desdites bagues réalisées en "NYLON" ou en "TEFLON". n convient donc, non seulement d'appliquer cet enseignement, mais en outre de l'améliorer par un choix judicieux du matériau plastique.

L'invention réalise cette synthèse et propose l'adoption, dans le mécanisme défini par le préambule de la revendication 1, des dispositions définies par la partie caractérisante de cette revendication.

Les avantageuses dispositions suivantes sont par ailleurs de préférence adoptées :
- entre le fond du logement d'un joint annulaire et ledit joint annulaire, un ressort est interposé et a un effet tendant à déformer le joint dans le sens de son application sur la face en regard de la deuxième des deuxdites pièces ;
- le ressort est constitué par un jonc torique réalisé en élastomère ;
- le ressort est constitué par un anneau métallique coupé et élastiquement déformable ;
- les logements des éléments d'étanchéité sont ménagés dans le noyau central.

L'avantage principal de la disposition proposée, conforme à l'invention, réside dans la diminution de l'encombrement axial des éléments d'étanchéité, l'étanchéité obtenue étant meilleure qu'auparavant.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels :
- la figure 1 est une coupe axiale d'un moteur hydraulique conforme à l'invention ;
- la figure 2A est un agrandissement du détail D de la figure 1 ;
- la figure 2B est une vue transversale d'un des éléments d'étanchéité utilisé dans le moteur de la figure 1 ;
- les figures 3A,3B, et, 4A,4B, analogues aux figures 2A,2B, respectivement, représentent deux variantes de réalisation d'éléments d'étanchéité conformes à l'invention.

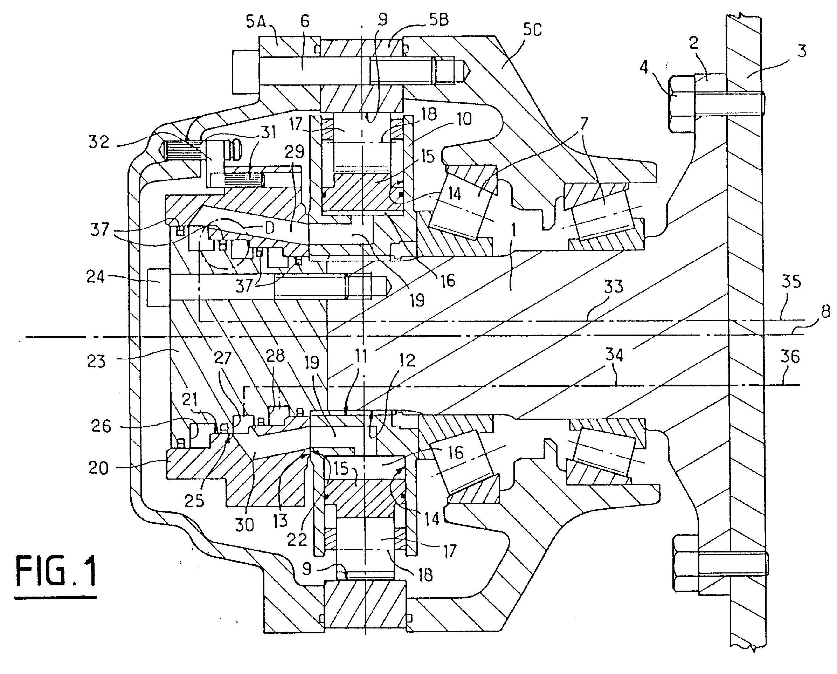

Le moteur représenté sur la figure 1 possède un arbre 1, dont une extrémité est conformée en une bride 2, qui permet la fixation dudit moteur sur un support 3, externe au moteur, au moyen de vis 4. Le support 3 est par exemple constitué par le châssis d'un véhicule.

Ce moteur comprend :
- un carter en trois parties 5A,5B,5C, qui sont assemblées par des vis 6 ;
- des roulements coniques 7, qui réalisent le montage à rotation du carter 5A-5B-5C par rapport à l'arbre 1, autour d'un axe de rotation 8, les roulements 7 étant disposés entre la partie 5C du carter et l'arbre 1 ;
- une came ondulée 9, qui est constituée par la face périphérique interne de la partie 5B du carter ;
- un bloc-cylindres 10, qui comporte un évidement central muni de cannelures 11, ces cannelures 11 coopèrant avec des cannelures 12, dont est muni l'arbre 1, afin de réaliser le montage du bloc-cylindres 10 sur l'arbre 1 et de rendre ces deux pièces solidaires vis-à-vis de la rotation autour de l'axe de rotation 8 ;
- une face de communication 13, appartenant au bloc-cylindres 10, perpendiculaire à l'axe de rotation 8 ;
- une pluralité de cylindres 14, ménagés dans le bloc-cylindres 10, disposés radialement par rapport à l'axe de rotation 8 et angulairement réglièrement espacés ;
- une pluralité de pistons 15, montés coulissants, chacun, dans un cylindre 14 et délimitant à l'intérieur dudit cylindre une chambre 16 de travail du fluide hydraulique ;
- une pluralité de rouleaux 17 montés, chacun, à l'extrémité d'un piston 15, de manière à pouvoir tourner autour d'un axe 18 parallèle à l'axe de rotation 8 et à réaliser l'appui de chaque piston 15 sur la came 9 ;
- des conduits de cylindre 19, un par cylindre, qui relient les chambres de travail 16 à la face de communication 13, en débouchant dans celle-ci par des orifices centrés sur un même cercle, lui-même coaxial à l'axe de rotation 8, et en étant angulairement régulièrment répartis ;
- un distributeur interne de fluide 20, qui comporte un évidement central 21 et une face de distribution 22 plane et maintenue en appui sur la face de communication 13 du bloc-cylindres ;
- un noyau central 23, qui est fixé sur l'extrémité interne de l'arbre 1 au moyen de vis 24, et qui possède une face axiale 25, dont la forme est complémentaire de celle de l'évidement central 21 du distributeur interne 20 ;
- trois gorges 26,27,28 ménagées entre lesdits évidement central 21 et face axiale 25, dans l'exemple représenté, ménagées dans le noyau central 23 ;
- des conduits 29,30 ménagés dans le distributeur interne 20, qui relient les gorges 26,27, respectivement, à la face de distribution 22, en débouchant dans celle-ci par des orifices centrés sur un cercle coaxial à l'axe de rotation 8 et de diamètre égal à celui de centrage des orifices des conduits de cylindre 19 dans la face de communication 13 ;
- deux ergots 31, fixés dans la partie 5A du carter et dans le distributeur interne 20, reliés par un levier 32, l'ensemble réalisant l'immobilisation, vis-à-vis de la rotation du distributeur interne 20 par rapport à la came 9, par l'intermédiaire du carter 5A-5B-5C ;
- deux conduits internes 33,34, ménagés dans le noyau central 23 et dans l'arbre 1 et reliant les gorges 26,27 à deux conduits externes 35,36, respectivement, d'alimentation du moteur en fluide sous pression et d'échappement vers un réservoir de décharge du fluide ayant travaillé dans le moteur ;
- des joints annulaires 37 sont disposés, un de chaque côté de chaque gorge 26,27,28, entre le noyau central 23 et l'évidement 21 du distributeur interne 20 et réalisent l'étanchéité entre ces deux pièces.

Il est bien entendu essentiel que l'appui de la face de distribution 22 du distributeur interne 20 sur la face de communication 13 du bloc-cylindres 10 soit réalisé avec étanchéité. Pour ce faire, un jeu diamétral (J) est ménagé entre les faces axiales 21 du distributeur interne et 25 du noyau central 23, permettant un léger désalignement du distributeur interne par rapport à l'axe de rotation 8. Le distributeur interne 20 est monté "flottant", de manière que soit effectivement réalisé l'appui étanche de sa face de distribution 22 sur la face de communication 13 du bloc-cylindres 10. Les joints annulaires 37, interposés entre deux pièces, - le distributeur interne 20 et le noyau central 23 -, montées rotatives l'une par rapport à l'autre, ont pour fonction d'assurer l'étanchéité dynamique entre ces deux pièces, étanchéité que l'existence du jeu J ne permet pas d'assurer directement entre lesdites pièces. A noter que le jeu J est faible, qu'ainsi le désalignement du distributeur interne par rapport à l'axe de rotation reste également faible, et qu'en conséquence, la face de distribution 22 est en permanence sensiblement perpendiculaire à l'axe de rotation 8.

Compte tenu du fait que le distributeur interne 20 et le noyau central 23 sont montés à rotation relative, les joints annulaires analogues aux joints 37 représentés étaient constitués avant la présente invention, par des segments métalliques qui constituaient les seuls moyens connus pour réaliser des étanchéités dynamiques.

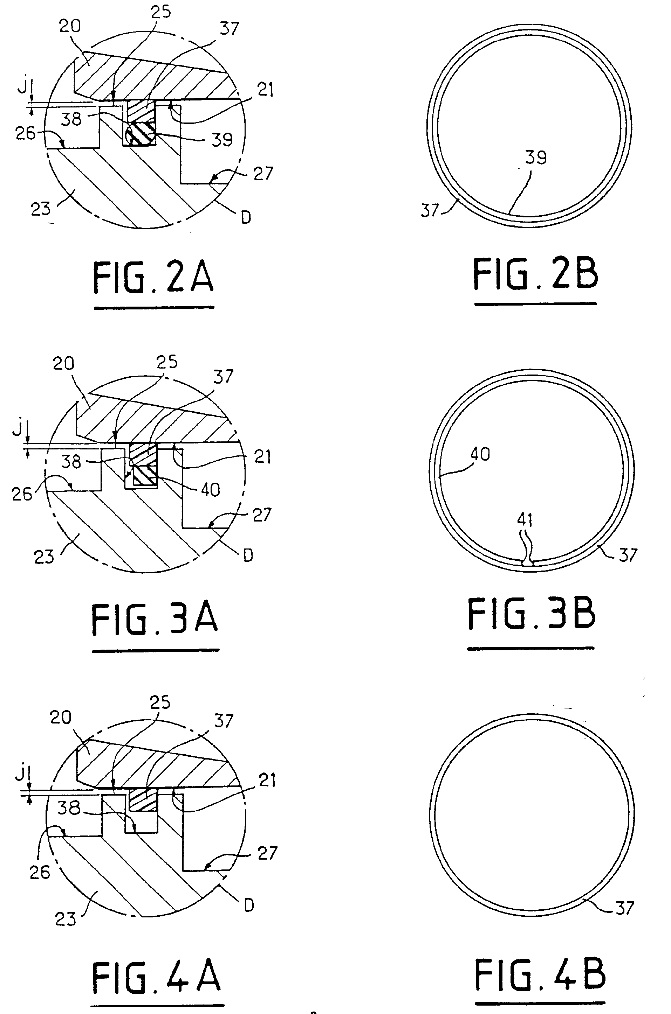

De manière nouvelle, selon l'invention, notamment dans chacune des trois réalisations selon les figures 2A-2B, 3A-3B, et 4A-4B, les joints annulaires 37 sont réalisés en un matériau plastique, le polyamide 6 (PA 6) et le polyamide 6,6 (PA 6,6) étant préférentiellement choisis en raison de l'ensemble de leurs caractéristiques. Dans les réalisations représentées, les joints 37 sont partiellement contenus dans des rainures 38 ménagées dans le noyau central 23 et débouchant à sa périphérie.

Selon la réalisation des figures 2A,2B, un jonc torique 39 en élastomère, par exemple en nitrile butadiène, connu sous la désignation "NBR", est interposé entre le fond de la rainure 38 et le joint d'étanchéité 37 et a pour effet d'appliquer fermement le joint d'étanchéité 37 sur la face en regard de l'évidement 21. Le jonc 39 est continu, sans interruption.

Selon la réalisation des figures 3A,3B, c'est un segment annulaire métallique, élastique 40, qui comporte une interruption 41, qui est disposé entre le fond de la rainure 38 et le joint d'étanchéité 37, dans le même but que le jonc 39 des figures 2A,2B.

Enfin, dans la réalisation des figures 4A,4B, le joint d'étanchéité 37 est suffisamment résistant et élastique pour assumer seul l'étanchéité au contact de la face en regard de l'évidement 21.

La fonction d'étanchéité, entre deux pièces rotatives l'une par rapport à l'autre, réalisée par le joint d'étanchéité 37 n'est pas nouvelle. Antérieurement, cette étanchéité était réalisée, comme celà a déjà été rappelé, par des segments métalliques. Ce qui est nouveau, c'est le fait de réaliser cette étanchéité entre deux éléments rotatifs au moyen d'un joint réalisé en un matériau plastique. Les essais effectués avec les matériaux plastiques choisis (polyamide 6 et 6,6) pour réaliser les joints 37 montrent que ces joints se déforment sous l'effet des pressions des fluides, mais résistent cependant à ces pressions et aux contraintes provoquées par la vitesse de rotation.

Avant l'invention, il avait été estimé que les matériaux plastiques étaient inaptes à être utilisés pour constituer des joints d'étanchéité entre deux pièces montées à rotation relative. Il était estimé que de tels joints seraient trop fragiles. L'invention a consisté à vaincre ce préjugé technologique et, en préconisant des joints en matériau plastique, a permis de constater que ces joints d'étanchéité nouveaux, par leur aptitude à être déformés sous l'effet de la pression d'un fluide, étaient plus efficaces, et assuraient une meilleure étanchéité que des segments métalliques, même avec un encombrement inférieur. Ainsi, le rendement volumétrique du mécanisme a-t-il pu être augmenté. La mise en oeuvre de l'invention a également permis de constater la bonne tenue en service des joints d'étanchéité 37 réalisés en un matériau plastique.

De plus, ont été constatées :
- une augmentation du rendement mécanique du moteur, les forces de frottement entre les joints 37 et l'évidement 21 n'étant égales qu'à la moitié de celles constatées antérieurement entre des segments métalliques et ledit évidement ;
- la diminution du frottement à toutes les vitesses de rotation, en particulier à vitesse de rotation quasiment nulle, permet de réduire les dimensions des pièces d'entraînement, telles que les ergots 31 et le levier 32 ;
- une réduction de la longueur des chanfreins de montage des joints d'étanchéité 37 par rapport à la longueur des chanfreins de montage des segments métalliques, ceci étant en rapport avec le fait que le segment, ouvert par nature, monté dans sa gorge 38 sur la pièce 23 a un diamètre avant montage dans la pièce 20 qui est supérieur au diamètre du joint plastique 37 dans les mêmes conditions, cette réduction de longueur contribuant à améliorer la compacité axiale du moteur correspondant.

Il y a enfin lieu de noter que l'invention est également applicable à la réalisation des pompes ayant une came tournante, les alimentation et échappement de fluide étant réalisés par la partie axiale du mécanisme.

A titre d'indications complémentaires, il a été vérifié que l'invention recevait une application particulièrement satisfaisante dans la réalisation des moteurs et des pompes ayant les caractéristiques suivantes :
- diamètres jusqu'à 200 mm ;
- pressions dans les gorges 26, 27, 28, jusqu'à 450 bars ;
- vitesse de rotation du carter 5A-5B-5C par rapport au bloc-cylindres 10, et donc, du distributeur interne 20 par rapport au noyau central 23, jusqu'à 200 tours/minute :
- jeux J jusqu'à 0,40 mm.

## Revendications

1. Mécanisme à fluide sous pression, moteur ou pompe, dit "à came tournante", comportant :
- un bloc-cylindres (10) fixe par rapport à un support (3) externe du mécanisme ;
- une came (9) montée rotative par rapport audit bloc-cylindres autour d'un axe de rotation (8) ;
- un distributeur interne de fluide (20), solidaire (31-32) vis-à-vis de la rotation de ladite came, présentant un évidement central (21) de forme complémentaire de celle (25) d'un noyau central (23) solidaire vis-à-vis de la rotation dudit bloc-cylindres ;
- des gorges (26,27,28) ménagées entre lesdits distributeur interne de fluide (20) et noyau central (23), constituant des enceintes susceptibles de contenir des fluides sous pression ; et,
- des éléments d'étanchéité (37) disposés entre le distributeur interne de fluide et le noyau central, de chaque côté de chaque gorge, contenu chacun dans un logement (38) ménagé dans une première (23) des deux pièces - distributeur interne et noyau central ;
la valeur maximale des pressions dans lesdites gorges (26, 27, 28) étant égale à 450 bars et celle de la vitesse de rotation de la came (9) par rapport au bloc-cylindres (10) donc du distributeur interne de fluide (20) par rapport au noyau central 23)) étant égale à 200 tours/minute ;
caractérisé en ce que chaque élément d'étanchéité comprend un joint annulaire (37), qui est réalisé en un polyamide 6 ou 6,6 et est en contact étanche avec la deuxième (20) des deuxdites pièces.

2. Mécanisme selon la revendication 1, caractérisé en ce qu'entre le fond du logement (38) d'un joint annulaire et ledit joint annulaire (37), un ressort est interposé et a un effet tendant à déformer le joint dans le sens de son application sur la face en regard de la deuxième des deux dites pièces.

3. Mécanisme selon la revendication 2, caractérisé en ce que le ressort est constitué par un jonc torique (39) réalisé en élastomère.

4. Mécanisme selon la revendication 2, caractérisé en ce que le ressort est constitué par un anneau métallique (40) coupé (41) et élastiquement déformable.

5. Mécanisme selon l'une quelconque des revendications 1 à 4, caractérisé en ce que les logements (38) des éléments d'étanchéité (37) sont ménagés dans le noyau central (23).

## Claims

1. So-called "rotating cam" type pressurized fluid mechanism, motor or pump, comprising:
- a cylinder-block (10) fixed with respect to a support (3) outside the mechanism;
- a cam (9) mounted to rotate with respect to said cylinder-block about an axis of rotation (8);
- an internal fluid distributor (20), fast (31, 32) with respect to the rotation of said cam, presenting a central recess (21) whose shape is complementary of that (25) of a central core (23) fast with respect to the rotation of said cylinder-block;
- grooves (26, 27, 28) made between said internal fluid distributor (20) and central core (23), constituting enclosures capable of containing fluids under pressure; and,
- seal elements (37) disposed between the internal fluid distributor and the central core, on either side of each groove, each contained in a housing (38) made in a first (23) of the two pieces - internal distributor and central core;
the maximum value of the pressures in said grooves (26, 27, 28) being equal to 450 bars and that of the speed of rotation of the cam (9) with respect to the cylinder-block (10), therefore of the internal fluid distributor (20) with respect to the central core (23), being equal to 200 rpm;
characterized in that each seal element comprises a ring-type joint (37) which is made of a polyamide 6 or 6.6 and is in tight contact with the second (20) of said two pieces.

2. Mechanism according to claim 1, characterized in that, between the bottom of the housing (38) for a ring-type joint and said ring-type joint (37), a spring is interposed and has an effect tending to deform the joint in the sense of its application on the opposite face of the second of said two pieces.

3. Mechanism according to claim 2, characterized in that the spring is constituted by an O-ring (39) made of elastomer.

4. Mechanism according to claim 2, characterized in that the spring is constituted by a metal ring (40), cut (41) and elastically deformable.

5. Mechanism according to any one of claims 1 to 4, characterized in that the housings (38) for the seal elements (37) are made in the central core (23).

## Patentansprüche

1. Druckfluidmechanismus, Motor oder Pumpe von Drehkurvenscheibenbauart, umfassend:
- einen Zylinderblock (10), der fest ist bezüglich eines äußeren Trägers (3) des Mechanismus;
- eine bezüglich des Zylinderblocks um eine Rotationsachse (8) drehbar befestigte Kurvenscheibe (9);
- einen internen Fluidverteiler (20), der bezüglich der Kurvenscheibe drehfest (31-32) ist und eine zentrale Aussparung (21) aufweist, die in der Form komplementär ist zu der (25) eines zentralen Kerns (23), der bezüglich des Zylinderblocks drehfest ist;
- zwischen dem internen Fluidverteiler (20) und dem zentralen Kern (23) ausgesparte Auskehlungen (26,27,28), die Einfassungen bilden, die Fluide unter Druck enthalten können; und
- Dichtungselemente (37), die zwischen dem internen Fluidverteiler und dem zentralen Kern liegen, an jeder Seite jeder Auskehlung, und jedes in einer Aufnahme (38) enthalten ist, die in einem ersten (23) der beiden Teile - interner Verteiler und zentraler Kern - ausgespart ist;
wobei der maximale Wert der Drücke in den Auskehlungen (26,27,28) 450 bar beträgt und der Wert der Rotationsgeschwindigkeit der Kurvenscheibe (9) bezüglich des Zylinderblocks (10), also des internen Fluidverteilers (20) bezüglich des zentralen Kerns (23) 200 Umdrehungen/Minute beträgt,
dadurch gekennzeichnet, daß
jedes Dichtungselement eine ringförmige Dichtung (37) aufweist, die aus einem Polyamid 6 oder 6,6 hergestellt ist und in dichtem Kontakt mit dem zweiten (20) der beiden Teile ist.

2. Mechanismus nach Anspruch 1, dadurch gekennzeichnet, daß zwischen dem Boden der Aufnahme (38) einer ringförmigen Dichtung und der ringförmigen Dichtung (37) eine Feder liegt, die die Wirkung hat, die Dichtung in Richtung ihres Einsatzes auf der Seite gegenüber dem zweiten der beiden Teile zu verformen.

3. Mechanismus nach Anspruch 2, dadurch gekennzeichnet, daß die Feder aus einem aus Elastomer hergestellten, torischen Ring (39) gebildet ist.

4. Mechanismus nach Anspruch 2, dadurch gekennzeichnet, daß die Feder aus einem geschnittenen (41) und elastisch verformbaren Metallring (40) gebildet ist.

5. Mechanismus nach einem der Ansprüche 1 bis 4, dadurch gekennzeichnet, daß die Aufnahmen (38) der Dichtungselemente (37) in dem zentralen Kern (23) ausgespart sind.
